# EUROPÄISCHE PATENTANMELDUNG

(11) **EP 1 411 087 A1**
(43) Veröffentlichungstag der Anmeldung: **21.04.2004**
(21) Anmeldenummer: 03018974.0
(22) Anmeldetag: 21.08.2003
(51) Int. Cl.: C08L 77/00, C08L 77/02, C08L 77/06, B29C 67/04, B29C 67/00, C08K 3/22

(54) **Laser-Sinter-Pulver mit Titandioxidpartikeln, Verfahren zu dessen Herstellung und Formkörper, hergestellt aus diesem Laser-Sinterpulver**

(30) Priorität: 17.10.2002 DE 10248406
(71) Anmelder: Degussa AG, 40474 Düsseldorf (DE)
(72) Erfinder: Baumann, Franz-Erich, Dr., 48249 Dülmen (DE); Monsheimer, Sylvia, 45721 Haltern am See (DE); Grebe, Maik, 44805 Bochum (DE); Christoph, Wolfgang, 45768 Marl (DE); Schiffer, Thomas, Dr., 45721 Haltern am See (DE); Scholten, Heinz, Dr., 45721 Haltern am See (DE)

(57) **Zusammenfassung**

Die vorliegende Erfindung betrifft ein Sinterpulver aus Polyamid, welches Titandioxidpartikel aufweist, ein Verfahren zum Laser-Sintern sowie Formkörper, hergestellt aus diesem Sinterpulver.

Die mit dem erfindungsgemäßen Pulver gebauten Formkörper zeigen gegenüber herkömmlichen Produkten in ihrem Aussehen und in ihrer Oberflächenbeschaffenheit deutliche Vorteile, die auf der Vergilbungsresistenz des erfindungsgemäßen Pulvers gegen über den thermischen Belastungen beim Laser-Sintern beruhen.

Zudem weisen Formkörper, hergestellt aus dem erfindungsgemäßen Sinterpulver, auch deutlich verbesserte mechanische Eigenschaften gegenüber Formkörpern auf Basis von herkömmlichen Polyamid-12 Pulvern auf, insbesondere beim Elastizitätsmodul.

## Beschreibung

Die Erfindung betrifft ein Laser-Sinter-Pulver auf Basis von Polyamid, vorzugsweise Polyamid 12, welches Titandioxidpartikel aufweist, ein Verfahren zur Herstellung dieses Pulvers sowie Formkörper, hergestellt durch selektives Laser-Sintern dieses Pulvers.

Die zügige Bereitstellung von Prototypen ist eine in der jüngsten Zeit häufig gestellte Aufgabe. Ein Verfahren, welches besonders gut für den Zweck des Rapid Prototypings geeignet ist, ist das selektive Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren wieder zu einer festen Masse. Durch Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in der Patentschriften US 6,136,948 und WO 96/06881 (beide DTM Corporation) beschrieben. Eine Vielzahl von Polymeren und Copolymeren wird für diese Anwendung beansprucht, wie z. B. Polyacetat, Polypropylen, Polyethylen, Ionomere und Polyamid.

In der Praxis hat sich beim Laser-Sintern vor allem Polyamid 12-Pulver (PA 12) für die Herstellung von Formkörpern, insbesondere von technischen Bauteilen bewährt. Die aus PA 12 Pulver gefertigten Teile genügen den hohen Anforderungen die bezüglich der mechanischen Beanspruchung gestellt werden und kommen damit in ihren Eigenschaften besonders nahe an die späteren Serienteile, die durch Extrusion oder Spritzgießen erstellt werden.

Gut geeignet ist dabei ein PA 12-Pulver mit einer mittleren Korngröße (d₅₀) von 50 bis 150 µm, wie man es beispielsweise gemäß DE 197 08 946 oder auch DE 44 21 454 erhält. Vorzugsweise wird dabei ein Polyamid 12 Pulver mit einer Schmelztemperatur von 185 - 189 °C, einer Schmelzenthalpie von 112 kJ/mol und einer Erstarrungstemperatur von 138 bis 143 °C, wie es in EP 0 911 142 beschrieben wird.

Nachteilig bei den derzeit eingesetzten Polyamid-Pulvern sind Vergilbungen, die bei den Formkörpern auftreten. Diese können nachträglich am fertigen Bauteil entstehen, sofern die Bauteile starker Bestrahlung mit UV-haltigem Licht oder auch langer direkter Sonneneinstrahlung ausgesetzt werden.

Ein gelblicher Farbstich kann aber auch bereits durch die lange und starke thermische Belastung beim Laser-Sintern selbst entstehen. Insbesondere wenn große Teile an Rückpulver verwendet werden, also Laser-Sinter-Pulver, welches schon einmal eingesetzt wurde, aber bei diesem Einsatz nicht aufgeschmolzen wurde, wird dieser Effekt beobachtet. Mit der Vergilbung geht häufig eine Verschlechterung der mechanischen Eigenschaften einher, da es zur Alterung des Materials kommt. Die Alterung kann sich z. B. durch eine Versprödung, eine verschlechterte Reißdehnung oder ein verschlechtertes Kerbschlagverhalten bemerkbar machen.

Aufgabe der vorliegenden Erfindung war es deshalb ein Laser-Sinter-Pulver bereitzustellen, welches eine bessere Resistenz gegenüber den thermischen Belastungen beim Lasersintern und verbesserte Alterungseigenschaften aufweist. Außerdem sollte das Laser-Sinter-Pulver eine höhere Stabilität gegen UV-Strahlung aufweisen und somit zur Herstellung von Formkörpern geeignet sein, die Licht mit einem hohen UV-Anteil ausgesetzt sind.

Überraschenderweise wurde nun gefunden, dass sich durch Zugabe von Titandioxid zu Polyamiden Sinterpulver herstellen lassen, aus denen sich Formkörper durch Laser-Sintern produzieren lassen, die deutlich unempfindlicher gegenüber den thermischen Belastungen sind als Formkörper aus herkömmlichen Sinter-Pulvern. Es konnte außerdem eine höhere Beständigkeit der Formkörper gegen UV-Strahlung festgestellt werden.

Gegenstand der vorliegenden Erfindung ist deshalb ein Sinterpulver zum selektiven Laser-Sintern, welches dadurch gekennzeichnet ist, dass das Pulver zumindest ein Polyamid und Titandioxidpartikel aufweist.

Ebenso ist Gegenstand der vorliegenden Erfindung ein Verfahren zur Herstellung von erfindungsgemäßem Sinterpulver, welches dadurch gekennzeichnet ist, dass zumindest ein Polyamidpulver mit Titandioxidpartikeln zu einem Sinterpulver vermischt wird.

Außerdem sind Gegenstand vorliegenden Erfindung Formkörper, hergestellt durch Laser-Sintern, welche dadurch gekennzeichnet sind, dass sie Titandioxid und zumindest ein Polyamid aufweisen.

Das erfindungsgemäße Sinterpulver hat den Vorteil, dass aus ihm durch Laser-Sintern hergestellte Formkörper eine deutlich höhere Stabilität gegenüber UV-Strahlung aufweisen. Es sind deshalb Formkörper zugänglich, die auch nach längerer Bestrahlung mit UV-Strahlung keine oder nur geringe Anzeichen einer Vergilbung aufweisen. Mit der Vergilbung geht häufig eine Verschlechterung der mechanischen Eigenschaften einher, da es zur Alterung des Materials kommt. Die erfindungsgemäßen Formkörper zeigen eine deutlich höhere Beständigkeit gegenüber solchen Alterungsprozessen, was sich durch eine geringe Versprödung, eine gute Reißdehnung und/oder ein gutes Kerbschlagverhalten bemerkbar macht. Das erfindungsgemäße Sinterpulver weist außerdem eine verbesserte thermische Stabilität auf weshalb es wesentlich unproblematischer als Rückpulver eingesetzt werden kann als herkömmliche Sinterpulver.

Ein weiterer Vorteil des erfindungsgemäßen Sinterpulvers liegt darin, dass es sich in beliebigen Mengen (0 bis 100 Teile) mit einem herkömmlichen Laser-Sinter-Pulver auf Basis von Polyamiden mischen lässt. Das erhaltene Pulvergemisch zeigt gegenüber herkömmlichem Sinterpulver ebenfalls eine verbesserte Beständigkeit gegenüber den thermischen Belastungen beim Lasersintern.

Außerdem konnte überraschenderweise festgestellt werden, dass Formkörper, hergestellt aus dem erfindungsgemäßen Sinterpulver, auch eine Verbesserung der mechanischen Eigenschaften aufweisen, insbesondere eine Erhöhung des Elastizitätsmoduls.

Das erfindungsgemäße Sinterpulver sowie ein Verfahren zu dessen Herstellung wird nachfolgend beschrieben, ohne dass die Erfindung darauf beschränkt sein soll.

Das erfindungsgemäße Sinterpulver zum selektiven Laser-Sintern zeichnet sich dadurch aus, dass das Pulver zumindest ein Polyamid und Titandioxidpartikel aufweist. Als Polyamid weist das erfindungsgemäße Sinterpulver vorzugsweise ein Polyamid auf, welches pro Carbonamid-Gruppe zumindest 8 Kohlenstoffatome aufweist. Bevorzugt weist das erfindungsgemäße Sinterpulver zumindest ein Polyamid auf, welches 10 oder mehr Kohlenstoffatome pro Carbonamid-Gruppe aufweist. Ganz besonders bevorzugt weist das Sinterpulver zumindest ein Polyamid, ausgewählt aus Polyamid 612 (PA 612), Polyamid 11 (PA 11) und Polyamid 12 (PA 12), auf.

Das erfindungsgemäße Sinterpulver weist vorzugsweise Polyamid mit einer mittleren Partikelgröße d₅₀ von 10 bis 250 µm, vorzugsweise von 30 bis 100 µm und besonders bevorzugt von 40 bis 80 µm auf.

Für das Lasersintern ist insbesondere ein Polyamid 12 Sinterpulver geeignet, welches eine Schmelztemperatur von 185 bis 189 °C, vorzugsweise von 186 bis 188 °C, eine Schmelzenthalpie von 112 ± 17 kJ/mol, vorzugsweise von 100 bis 125 kJ/mol und eine Erstarrungstemperatur von 138 bis 143 °C, vorzugsweise von 140 bis 142 °C aufweist. Der Prozess für die Herstellung für die in den erfindungsgemäßen Sinterpulver einsetzbaren Polyamiden ist allgemein bekannt und kann für die Herstellung von PA 12 z. B. den Schriften DE 29 06 647, DE 35 10 687, DE 3 510 691 und DE 44 21454 entnommen werden. Das benötigte Polyamidgranulat kann von verschiedenen Herstellern bezogen werden, beispielsweise wird Polyamid 12 Granulat von der Degussa AG unter dem Handelsnamen VESTAMID angeboten.

Das erfindungsgemäße Sinterpulver weist bezogen auf die Summe der im Pulver vorhandenen Polyamide vorzugsweise von 0,01 bis 30 Gew.-% Titandioxidpartikel, bevorzugt von 0,1 bis 20 Gew.-% Titandioxidpartikel, besonders bevorzugt von 0,5 bis 15 Gew.-% Titandioxidpartikel und ganz besonders bevorzugt von 1 bis 10 Gew.-% Titandioxidpartikel auf. Das erfindungsgemäße Sinterpulver kann eine Mischung von Titandioxidpartikeln und Polyamidpartikeln aufweisen oder aber Polyamidpartikel bzw. -pulver, welche eingearbeitete Titandioxidpartikel aufweisen. Bei einem Anteil der Titandioxidpartikel von unter 0,01 Gew.-% bezogen auf die Summe der im Pulver vorhandenen Polyamide nimmt der gewünschte Effekt der thermischen Stabilität und der Vergilbungsresistenz deutlich ab. Bei einem Anteil der Titandioxidpartikel von über 30 Gew.-% bezogen auf die Summe der im Pulver vorhandenen Polyamide verschlechtern sich die mechanischen Eigenschaften wie z. B. die Reißdehnung aus solchen Pulvern hergestellter Formkörper deutlich.

Die im erfindungsgemäßen Sinterpulver enthaltenen Titandioxidpartikel sind vorzugsweise Anatas- und/oder Rutilpartikel. Vorzugsweise werden Titandioxidpartikel mit Rutilstruktur eingesetzt.

Erfindungsgemäßes Sinterpulver kann außerdem Hilfsstoffe und/oder Füllstoff aufweisen. Solche Hilfsstoffe können z. B. Rieselhilfsmittel, wie z. B. gefällte und/oder pyrogene Kieselsäuren sein. Gefällte Kieselsäuren werden zum Beispiel unter dem Produktnamen Aerosil, mit unterschiedlichen Spezifikationen, durch die Degussa AG angeboten. Vorzugsweise weist erfindungsgemäßes Sinterpulver weniger als 3 Gew.-%, vorzugsweise von 0,001 bis 2 Gew.-% und ganz besonders bevorzugt von 0,05 bis 1 Gew.-% solcher Hilfsstoffe bezogen auf die Summe der vorhandenen Polyamide auf. Die Füllstoffe können z. B. Glas-, Metall- oder Keramikpartikel, wie z. B. Glaskugeln, Stahlkugeln oder Metallgrieß oder Fremdpigmente, wie z. B. Übergangsmetalloxide sein.

Die Füllstoffpartikel weisen dabei vorzugsweise eine kleinere oder ungefähr gleich große mittlere Partikelgröße wie die Partikel der Polyamide auf. Vorzugsweise sollte die mittlere Partikelgröße d₅₀ der Füllstoffe die mittlere Partikelgröße d₅₀ der Polyamide um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Schichtdicke in der Laser-Sinter-Apparatur.

Vorzugsweise weist erfindungsgemäßes Sinterpulver weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe bezogen auf die Summe der vorhandenen Polyamide auf.

Beim Überschreiten der angegebenen Höchstgrenzen für Hilfs- und/oder Füllstoffe kann es, je nach eingesetztem Füll- oder Hilfsstoff zu deutlichen Verschlechterungen der mechanischen Eigenschaften von Formkörpern kommen, die mittels solcher Sinterpulver hergestellt wurden. Die Überschreitung kann außerdem zu einer Störung der Eigenabsorption des Laserlichts durch das Sinterpulver führen, so dass ein solches Pulver als Sinterpulver für das selektive Lasersintern nicht mehr einsetzbar ist.

Die Herstellung der erfindungsgemäßen Sinterpulver ist einfach möglich und erfolgt bevorzugt gemäß dem erfindungsgemäßen Verfahren zur Herstellung von erfindungsgemäßem Sinterpulver, welches sich dadurch auszeichnet, dass zumindest ein Polyamidpulver mit Titandioxidpartikeln vermischt wird.

Das Polyamidpulver kann ein bereits als Lasersinterpulver geeignetes Pulver sein, dem einfach pulverförmige Titandioxidpartikel zugemischt werden. Die Titandioxidpartikel weisen dabei vorzugsweise eine kleinere oder ungefähr gleich große mittlere Partikelgröße wie die Partikel der Polyamide auf. Vorzugsweise sollte die mittlere Partikelgröße d₅₀ der Titandioxidpartikel die mittlere Partikelgröße d₅₀ der Polyamide um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in der Laser-Sinter-Apparatur.

Es ist ebenso möglich, herkömmliche Sinterpulver mit erfindungsgemäßen Sinterpulvern zu mischen. Auf diese Weise lassen sich Sinterpulver mit einer optimalen Kombination von mechanischen und optischen Eigenschaften herstellen. Das Verfahren zur Herstellung solcher Mischungen kann z. B. DE 34 41 708 entnommen werden.

In einer Verfahrensvariante werden die Titandioxidpartikel in ein Polyamid eincompoundiert und das erhaltene titanoxidhaltige Polyamid wird zu Lasersinterpulver verarbeitet. Bei dieser Verfahrensvariante werden vorzugsweise Titandioxidpartikel eingesetzt, die eine mittlere Partikelgröße von kleiner 10 µm, vorzugsweise kleiner 1 µm und ganz besonders bevorzugt von 0,01 µm bis 0,75 µm aufweisen. Üblicherweise wird bei der Compoundierung ein Granulat erhalten, welches anschließend zu Sinterpulver verarbeitet wird. Verarbeitung kann z. B. durch Vermahlen oder Umfällen erfolgen. Die Verfahrensvariante, bei welcher die Titandioxidpartikel eincompoundiert werden, hat gegenüber dem reinen Mischungsverfahren den Vorteil, dass eine homogenere Verteilung der Titandioxidpartikel in dem Sinterpulver erzielt wird.

In einer weiteren, bevorzugten Verfahrensvariante wird das Titandioxid bereits beim Fällprozess des Polyamids zugesetzt. Ein solcher Fällprozess ist beispielsweise in DE 35 10 687 und DE 29 06 647 beschrieben. Mittels dieses Verfahrens kann z. B. Polyamid 12 aus einer Polyamid-Ethanol-Lösung durch Abziehen von Ethanol und gleichzeitigem Senken der Lösungstemperatur ausgefällt werden. Weist die Polyamid-Ethanol Lösung Titandioxidpartikel suspendiert auf, wird ein gefälltes titandioxidhaltiges Polyamid-Pulver erhalten. Für eine detaillierte Beschreibung des Verfahrens wird auf DE 35 10 687 bzw. DE 29 06 647 verwiesen. Der Fachmann erkennt sehr schnell, dass dieses Verfahren in abgewandelter Form auch auf andere Polyamide angewendet werden kann, wobei als Voraussetzung gilt, dass Polyamid und Lösemittel so gewählt werden, dass sich das Polyamid (bei einer erhöhten Temperatur) in dem Lösemittel löst und dass das Polyamid bei einer niedrigeren Temperatur und/oder beim Entfernen des Lösemittels aus der Lösung ausfällt. Durch Zugabe von Titandioxidpartikel geeigneter Partikelgröße zu dieser Lösung werden die jeweiligen Titandioxid aufweisenden Polyamide erhalten.

Als Titandioxidpartikel können handelsübliche Pigmente eingesetzt werden. Üblicherweise werden Titandioxidpartikel anorganisch oder organisch behandelt, um deren Alterungsstabilität und Bewitterungsstabilität zu erhöhen. Behandelte und unbehandelte Titan-dioxidpartikel sind z. B. über die Firmen DuPont, Sachtleben Chemie, Kronos oder ICI erhältlich.

Zur Verbesserung der Verarbeitungsfähigkeit oder zur weiteren Modifikation des Sinterpulvers können diesem anorganische Fremdpigmente, wie z. B. Übergangsmetalloxide, Stabilisatoren, wie z. B. Phenole, insbesondere sterisch gehinderte Phenole, Verlaufs- und Rieselhilfsmittel, wie z. B. pyrogene Kieselsäuren sowie Füllstoffpartikel zugegeben werden. Vorzugsweise wird, bezogen auf das Gesamtgewicht an Polyamiden im Sinterpulver, soviel dieser Stoffe den Polyamiden zugegeben, dass die für das erfindungsgemäße Sinterpulver angegeben Konzentrationen für Füll- und/oder Hilfsstoffe eingehalten werden.

Gegenstand der vorliegenden Erfindung sind auch Verfahren zur Herstellung von Formkörpem durch selektives Lasersintern bei denen erfindungsgemäße Sinterpulver, die Polyamid und Titandioxidpartikel aufweisen, eingesetzt werden. Insbesondere ist Gegenstand der vorliegenden Erfindung ein Verfahren zur Herstellung von Formkörpern durch selektives Lasersintern eines titandioxidhaltigen Fällpulvers auf Basis eines Polyamid 12, welches eine Schmelztemperatur von 185 bis 189 °C, eine Schmelzenthalpie von 112±+17 J/g und eine Erstarrungstemperatur von 138 bis 143 °C aufweist und dessen Verwendung in US 6,245,281 beschrieben wird.

Diese Verfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinanderfolgende Versinterung von Schichten von Polymerpartikeln werden dreidimensionale Objekte hergestellt. Einzelheiten zum Verfahren des selektiven Laser-Sinterns sind z. B. den Schriften US 6,136,948 und WO 96/06881 zu entnehmen.

Die erfindungsgemäßen Formkörper, die durch selektives Laser-Sintern hergestellt werden, zeichnen sich dadurch aus, dass sie ein titandioxidhaltiges Polyamid (also ein Polyamid mit feinst verteilten Titandioxidpartikeln) aufweisen. Vorzugsweise weisen die erfindungsgemäßen Formkörper zumindest ein titandioxidhaltiges Polyamid auf, welches pro Carbonamid-Gruppe zumindest 8 Kohlenstoffatome aufweist. Ganz besonders bevorzugt weisen erfindungsgemäße Formkörper zumindest ein titandioxidhaltiges Polyamid 612, Polyamid 11 und/oder ein Polyamid 12 auf.

Das in dem erfindungsgemäßen Formkörper vorhandene Titandioxid kann sowohl die Kristallstruktur des Anatas als auch des Rutils aufweisen. Vorzugsweise weist das in den erfindungsgemäßen Formkörpern vorhandene Titandioxid die Rutilstruktur auf. Prinzipiell können aber auch Mischkristalle und/oder amorphes Titandioxid eingesetzt werden. Vorzugsweise weist der erfindungsgemäße Formkörper, bezogen auf die Summe der im Formkörper vorhandenen Polyamide, von 0,01 bis 30 Gew.-% Titandioxid, bevorzugt von 0,1 bis 20 Gew.-%, besonders bevorzugt von 0,5 bis 15 Gew.-% und ganz besonders bevorzugt von 1 bis 10 Gew.-% auf.

Die Formkörper können außerdem Füllstoffe und/oder Hilfsstoffe, wie z. B. thermische Stabilisatoren wie z. B. sterisch gehinderte Phenolderivate aufweisen. Füllstoffe können z. B. Glas-, Keramikpartikel und auch Metallpartikel wie zum Beispiel Eisenkugeln, bzw. entsprechende Hohlkugeln sein. Bevorzugt weisen die erfindungsgemäßen Formkörper Glaspartikel, ganz besonders bevorzugt Glaskugeln auf. Vorzugsweise weisen erfindungsgemäße Formkörper weniger als 3 Gew.-%, vorzugsweise von 0,001 bis 2 Gew.-% und ganz besonders bevorzugt von 0,05 bis 1 Gew.-% solcher Hilfsstoffe bezogen auf die Summe der vorhandenen Polyamide auf. Ebenso bevorzugt weisen erfindungsgemäße Formkörper weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe bezogen auf die Summe der vorhandenen Polyamide auf.

Die folgenden Beispiele sollen das erfindungsgemäße Sinterpulver sowie dessen Verwendung beschreiben, ohne die Erfindung auf die Beispiele einzuschränken.

### Beispiel 1: Umfällung von unpigmentiertem Polyamid 12 (PA 12)

400 kg ungeregeltes, durch hydrolytische Polymerisation von Laurinlactam hergestelltes PA12 mit einer relativen Lösungsviskosität η_{rel.} von 1.61 (in angesäuertem m-Kresol) und einem Endgruppengehalt [COOH] = 72 mmol/kg und [NH₂] = 68 mmol/kg wurden mit 2500 l Ethanol, vergällt mit 2-Butanon und 1 % Wassergehalt, innerhalb von 5 Stunden in einem 3m³-Rührkessel (d = 160 cm) auf 145 °C gebracht und unter Rühren (Blattrührer, d = 80 cm, Drehzahl = 85 Upm) 1 Stunde bei dieser Temperatur belassen.

Anschließend wurde die Manteltemperatur auf 124 °C reduziert und unter kontinuierlichem Abdestillieren des Ethanols mit einer Kühlrate von 25 K/h bei derselben Rührerdrehzahl die Innentemperatur auf 125 °C gebracht. Von jetzt an wurde bei gleicher Kühlrate die Manteltemperatur 2K bis 3K unter der Innentemperatur gehalten, bis bei 109 °C die Fällung, erkennbar an der Wärmeentwicklung, einsetzte. Die Destillationsgeschwindigkeit wurde soweit erhöht, dass die Innentemperatur nicht über 109,3 °C anstieg. Nach 20 Minuten fiel die Innentemperatur ab, was das Ende der Fällung anzeigte. Durch weiteres Abdestillieren und Kühlung über den Mantel wurde die Temperatur der Suspension auf 45 °C gebracht und die Suspension danach in einen Schaufeltrockner überführt. Das Ethanol wurde bei 70 °C/400 mbar abdestilliert, und der Rückstand anschließend bei 20 mbar/ 85 °C 3 Stunden nachgetrocknet. Man erhält ein gefälltes PA 12. Von dem erhaltenen Produkt wurde eine Siebanalyse durchgeführt, die folgendes Ergebnis lieferte:
< 32µm: 8 Gew.-%
< 40µm: 17 Gew.-%
< 50µm: 26 Gew.-%
< 63µm: 55 Gew.-%
< 80µm: 92 Gew.-%
< 100µm: 100 Gew.-%
Die Schüttdichte betrug 433 g/l.

### Beispiel 2: Umfällung von PA 12 zu pigmentiertem Pulver:

Beispiel 1 wurde wiederholt, wobei man vor dem Lösen 24 kg (entspr. 6 %) Titandioxid-Pigment K-2310 (Kronos) zusetzte. Fällung und Trocknung erfolgte wie oben beschrieben. Man erhielt ein gefälltes PA 12, welches Titandioxidpartikel enthielt. Von dem erhaltenen Produkt wurde eine Siebanalyse durchgeführt, die folgendes Ergebnis lieferte:
< 32µm: 7 Gew.-%
< 40µm: 16 Gew.-%
< 50µm: 28 Gew.-%
< 63µm: 59 Gew.-%
< 80µm: 95 Gew.-%
< 100µm: 100 Gew.-%
Die Schüttdichte des Produktes betrug 463 g/l.

### Beispiel 3: Umfällung von PA 12 zu pigmentiertem Pulver:

Beispiel 1 wurde wiederholt, wobei man vor dem Lösen 4 kg (entspr. 1 %) Titandioxid-Pigment K-2310 zusetzte. Fällung und Trocknung erfolgten wie oben beschrieben. Es wurde wiederum ein gefälltes PA 12 erhalten, welches Titandioxidpartikel enthielt. Von dem erhaltenen Produkt wurde eine Siebanalyse durchgeführt, die folgendes Ergebnis lieferte:
< 32µm: 6 Gew.-%
< 40µm: 17 Gew.-%
< 50µm: 26 Gew.-%
< 63µm: 57 Gew.-%
< 80µm: 93 Gew.-%
< 100µm: 100 Gew.-%
Die Schüttdichte des Produktes betrug 448 g/l.

### Beispiel 4: (Vergleichsbeispiel)

Aus dem Fällpulver gemäß Beispiel 1 wurde auf einer Laser-Sinter-Anlage (EOSINT P360, Firma EOS) ein Prüfkörper des Typs 1b nach DIN EN ISO 527 (Mehrzweckprobekörper) zu Testzwecken gefertigt. Die Ergebnisse der mechanischen Tests an diesem Formteil sind in Tabelle 1 zusammengefasst.

### Beispiel 5: (erfindungsgemäß)

Aus dem Fällpulver gemäß Beispiel 2 wurde auf einer Laser-Sinter-Anlage (EOSINT P360, Firma EOS) ein Prüfkörper des Typs 1b nach DIN EN ISO 527 (Mehrzweckprobekörper) zu Testzwecken gefertigt. Die Ergebnisse der mechanischen Tests an diesem Formteil sind in Tabelle 1 zusammengefasst.

### Beispiel 6: (erfindungsgemäß)

Aus dem Fällpulver gemäß Beispiel 3 wurde auf einer Laser-Sinter-Anlage (EOSINT P360, Firma EOS) ein Prüfkörper des Typs 1b nach DIN EN ISO 527 (Mehrzweckprobekörper) zu Testzwecken gefertigt. Die Ergebnisse der mechanischen Tests an diesem Formteil sind in Tabelle 1 zusammengefasst.

### Beispiel 7: (erfindungsgemäß)

Das Pulver aus Beispiel 1 wurde mit dem titandioxidhaltigem PA-Pulver aus Beispiel 2 im Verhältnis 9 : 1 in einem Mischer gemischt. Diese Mischung wurde in einer Laser-Sinter-Anlage gemäß Beispiel 4 zur Herstellung eines Formkörpers gemäß Beispiel 4 eingesetzt. Die Ergebnisse der mechanischen Tests an diesem Formteil sind in Tabelle 1 zusammengefasst.

### Beispiel 8: (erfindungsgemäß)

Das Pulver aus Beispiel 1 wurde mit Glaskugeln (d₅₀ = 60 µm) als Füllstoff im Verhältnis 3 : 2 versetzt und vermischt. Dieses Gemisch wurde mit dem titandioxidhaltigem PA-Pulver aus Beispiel 3 im Verhältnis 2 : 1 gemischt. Diese Mischung wurde in einer Laser-Sinter-Anlage gemäß Beispiel 4 zur Herstellung eines Formkörpers gemäß Beispiel 4 eingesetzt. Die Ergebnisse der mechanischen Tests an diesem Formteil sind in Tabelle 1 zusammengefasst.

### Beispiel 9: (erfindungsgemäß)

Das Beispiel 5 wurde wiederholt, wobei dem PA12-Pulver aus Beispiel 1 zusätzlich 0,1 Gew.-% einer pyrogenen Kieselsäure (Aerosil 200, Degussa AG) als Rieselhilfe zugesetzt wurde. Die Ergebnisse der mechanischen Tests an diesem Formteil sind in Tabelle 1 zusammengefasst.

### Beispiel 10: (erfindungsgemäß)

Das Pulver aus Beispiel 1 wurde mit dem titandioxidhaltigem PA-Pulver aus Beispiel 3 im Verhältnis 7 : 3 in einem Mischer gemischt. Diese Mischung wurde in einer Laser-Sinter-Anlage gemäß Beispiel 4 zur Herstellung eines Formkörpers gemäß Beispiel 4 eingesetzt. Die Ergebnisse der mechanischen Tests an diesem Formteil sind in Tabelle 1 zusammengefasst.

**Tabelle 1:**

| Ergebnisse der mechanischen Tests an den Formkörpern gemäß der Beispiele | | | |
|---|---|---|---|
| Beispiel | Elastizitätsmodul [-] | Zugfestigkeit [N/mm²] | Reißdehnung [%] |
| 4 | 1674 | 47,5 | 22,7 |
| 5 | 1955 | 47,6 | 6,7 |
| 6 | 1805 | 49,1 | 17,9 |
| 7 | 1697 | 46,6 | 26,8 |
| 8 | 3337 | 46,4 | 3,4 |
| 9 | 1912 | 47,5 | 9,0 |
| 10 | 1885 | 48,0 | 19,3 |

Anhand der Beispiele kann sehr gut erkannt werden, dass die erfindungsgemäßen Formkörper aus erfindungsgemäßem Sinterpulver gemäß der Beispiele 2 bis 6 ein deutlich höheres Elastizitätsmodul aufweisen als Formkörper aus herkömmlichem Sinterpulver. Die Zugfestigkeit der erfindungsgemäßen Formkörper zeigt keine bzw. kaum Abweichungen von der Zugfestigkeit des Formkörpers aus herkömmlichem Sinterpulver. Die Reißdehnung zeigt, dass erfindungsgemäße Formkörper deutlich niedrigere Reißdehnung aufweisen. Da ein höheres Elastizitätsmodul eine geringere Biegbarkeit und eine kleine Reißdehnung geringere schlechtere Dehnbarkeit zur Folge haben, lassen sich mit dem erfindungsgemäßen Pulver also Bauteile als Prototypen mittels Laser-Sintern herstellen, die eine große Formstabilität aufweisen müssen, wie z. B. Zahnräder.

## Patentansprüche

1. Sinterpulver zum selektiven Laser-Sintern,
**dadurch gekennzeichnet,**
**dass** das Pulver zumindest ein Polyamid und Titandioxidpartikel aufweist.

2. Sinterpulver nach Anspruch 1,
**dadurch gekennzeichnet,**
**dass** es ein Polyamid aufweist, welches pro Carbonamid-Gruppe zumindest 8 Kohlenstoffatome aufweist.

3. Sinterpulver nach Anspruch 1 oder 2,
**dadurch gekennzeichnet,**
**dass** es Polyamid 612, Polyamid 11 oder Polyamid 12 aufweist.

4. Sinterpulver nach einem der Ansprüche 1 bis 3,
**dadurch gekennzeichnet,**
**dass** das Pulver bezogen auf die Summe der im Pulver vorhandenen Polyamide von 0,01 bis 30 Gew.-% Titandioxidpartikel aufweist.

5. Sinterpulver nach Anspruch 4,
**dadurch gekennzeichnet,**
**dass** das Pulver bezogen auf die Summe der im Pulver vorhandenen Polyamide von 0,5 bis 15 Gew.-% Titandioxidpartikel aufweist.

6. Sinterpulver nach einem der Ansprüche 1 bis 5,
**dadurch gekennzeichnet,**
**dass** das Pulver eine Mischung von Titandioxidpartikeln und Polyamidpartikeln aufweist.

7. Sinterpulver nach einem der Ansprüche 1 bis 5,
**dadurch gekennzeichnet,**
**dass** das Pulver in Polyamidpartikeln eingearbeitete Titandioxidpartikel aufweist.

8. Sinterpulver nach zumindest einem der Ansprüche 1 bis 7,
**dadurch gekennzeichnet,**
**dass** die Titandioxidpartikel Anatas- und/oder Rutilpartikel sind.

9. Sinterpulver nach zumindest einem der Ansprüche 1 bis 8,
**dadurch gekennzeichnet,**
**dass** es Hilfsstoffe und/oder Füllstoff aufweist.

10. Sinterpulver nach Anspruch 9,
**dadurch gekennzeichnet,**
**dass** es als Hilfsstoff Rieselhilfsmittel aufweist.

11. Sinterpulver nach Anspruch 9 oder 10,
**dadurch gekennzeichnet,**
**dass** es als Füllstoff Glaspartikel aufweist.

12. Verfahren zur Herstellung von Sinterpulver gemäß zumindest einem der Ansprüche 1 bis 11,
**dadurch gekennzeichnet,**
**dass** zumindest ein Polyamidpulver mit Titandioxidpartikeln vermischt wird.

13. Verfahren nach Anspruch 12,
**dadurch gekennzeichnet,**
**dass** die Titandioxidpartikel in das Polyamidpulver eincompoundiert werden und das erhaltene titanoxidhaltige Polyamid zu Lasersinterpulver verarbeitet wird.

14. Verfahren zur Herstellung von Formkörpern durch selektives Lasersintern von Sinterpulver gemäß zumindest einem der Ansprüche 1 bis 11.

15. Formkörper, hergestellt durch Laser-Sintern
**dadurch gekennzeichnet,**
**dass** er Titandioxid und zumindest ein Polyamid aufweist.

16. Formkörper nach Anspruch 15,
**dadurch gekennzeichnet,**
**dass** er ein Polyamid aufweist, welches pro Carbonamid-Gruppe zumindest 8 Kohlenstoffatome aufweist.

17. Formkörper nach Anspruch 15 oder 16,
**dadurch gekennzeichnet,**
**dass** er Polyamid 612, Polyamid 11 oder Polyamid 12 aufweist.

18. Formkörper nach einem der Ansprüche 15 bis 17,
**dadurch gekennzeichnet,**
**dass** er bezogen auf die Summe der vorhandenen Polyamide von 0,01 bis 30 Gew.-% Titandioxid aufweist.

19. Formkörper nach Anspruch 18,
**dadurch gekennzeichnet,**
**dass** er bezogen auf die Summe der vorhandenen Polyamide von 0,5 bis 15 Gew.-% Titandioxid aufweist.

20. Formkörper nach zumindest einem der Ansprüche 15 bis 19,
**dadurch gekennzeichnet,**
**dass** das Titandioxid Anatas und/oder Rutil ist.

21. Formkörper nach zumindest einem der Ansprüche 15 bis 20,
**dadurch gekennzeichnet,**
**dass** er Füllstoffe aufweist.

22. Formkörper nach Anspruch 21,
**dadurch gekennzeichnet,**
**dass** einer der Füllstoffe Glaspartikel sind.
